# EUROPÄISCHE PATENTSCHRIFT

(11) **EP 1 895 280 B1**
(45) Veröffentlichungstag und Bekanntmachung des Hinweises auf die Patenterteilung: **24.10.2018**
(21) Anmeldenummer: 07017148.3
(22) Anmeldetag: 31.08.2007
(51) Int. Cl.: G01G 11/04, G01G 19/00, G01G 19/414

(54) **Wägeeinrichtung, insbesondere dynamische Wägeeinrichtung und Wägevorrichtung hierfür**
Weighing device, in particular a dynamic weighing device, and corresponding weighing apparatus
Système de pesée, en particulier un système de pesée dynamique, et dispositif correspondant

(30) Priorität: 04.09.2006 DE 102006041836
(43) Veröffentlichungstag der Anmeldung: 05.03.2008
(73) Patentinhaber: WIPOTEC GmbH, 67657 Kaiserslautern (DE)
(72) Erfinder: Düppre, Theo, 67663 Kaiserslautern (DE)
(74) Vertreter: Eder, Thomas

(56) Entgegenhaltungen:
- WO-A-02/063254
- GB-A- 2 200 468
- US-A- 4 529 050
- US-A- 5 002 141
- US-A- 5 756 938
- Freescale Semiconductor: "Synchronizing the On-Chip Analog-to-Digital Converter on 56F80x Devices", , November 2005 (2005-11), Retrieved from the Internet: URL:http://cache.freescale.com/files/produ ct/doc/AN1933.pdf [retrieved on 2012-10-18]

## Beschreibung

Die Erfindung betrifft eine Wägeeinrichtung, insbesondere eine dynamische Wägeeinrichtung, beispielsweise eine Verbundwaage, mit den Merkmalen der Oberbegriffe der Patentansprüche 1 bzw. 2. Des Weiteren betrifft die Erfindung eine Wägevorrichtung für eine derartige Wägeeinrichtung mit den Merkmalen des Oberbegriffs des Patentanspruchs 20.

Bei Wägeeinrichtungen, bei denen mittels mehrerer Wägevorrichtungen jeweils ein Teilgewicht bestimmt und aus den einzelnen Teilgewichten ein Summen- oder Differenzgewicht ermittelt wird, wie dies beispielsweise bei Verbundwaagen der Fall ist, besteht häufig, wie dies auch bei Wägeeinrichtung mit einer einzigen Wägevorrichtung der Fall ist, die Anforderung nach einer schnellen und zudem hochgenauen Erfassung der Teilgewichte bzw. des Summen- oder Differenzgewichts. Während jedoch bei Wägeeinrichtungen mit einer einzigen Wägevorrichtung das Messergebnis insbesondere durch Schwankungen der auf die Zelle wirkenden Gewichtskraft, hervorgerufen beispielsweise durch auf die Wägevorrichtung wirkende Vibrationen oder Bewegungen des zu wiegenden Guts, verfälscht werden kann, tritt bei Wägeeinrichtungen mit mehreren Wägevorrichtungen die Problematik hinzu, dass sich bei während des Wägevorgangs bewegtem Gut die Verteilung der Gesamtgewichtskraft des Guts auf die einzelnen Wägevorrichtungen zeitlich ändert.

Derartige Wägevorrichtungen sind häufig als Wägezellen ausgebildet, die jeweils eigenständig eine auf sie wirkende (Teil-) Gewichtskraft erfassen und ein dieser entsprechendes analoges oder digitales Signal ausgeben. Digitale Wägezellen, die als Ausgangssignal bereits einen digitalen Wert für die Gewichtskraft in Gewichtseinheiten ausgeben, werden auch als Wägemodule bezeichnet.

Bei bekannten, industriell eingesetzten Verbundwaagen, wie sie beispielsweise in der US 5 990 422 beschrieben sind, sind mehrere Teilwaagen oder Wägezellen, oft mit verschieden langen Wägebändern, mit denen das zu wiegende Gut über die Lastaufnehmer der Wägezellen transportiert wird, seriell nacheinander angeordnet. Im Interesse eines möglichst hohen Durchsatzes an zu wiegendem Gut, beispielsweise verschieden schwere Packungen von Poststückgut, muss das jeweils zu wiegende Gut erforderlichenfalls vereinzelt und mit möglichst hoher, vorzugsweise konstanter Geschwindigkeit über die Wägebänder bewegt werden. Ist das betreffende Gut so lang, dass es gleichzeitig auf mehreren Wägebändern aufliegt, so muss das Gesamtgewicht durch die Addition der einzelnen, jeweils von einer Wägezelle ermittelten Teilgewichte bestimmt werden. Die Summation oder Subtraktion kann dabei entweder in einer zentralen Hauptsteuerung erfolgen, an welche die einzelnen Wägezellen angeschlossen sind (z.B. EP 0 319 202 A2) oder unmittelbar in einer oder mehreren ausgewählten Wägezellen, die dann über eine entsprechenden Rechenkapazität und -intelligenz verfügen müssen (z.B. DE 102 21 628 A1).

Neben einer rechnerischen Summen- oder Differenzbildung der einzelnen Teilgewichte kann die Gesamtgewichtskraft eines bestimmten Guts auch mittels eines mechanischen Hebelwerks bestimmt werden, welches ausgangsseitig wieder einen einzigen Kraftsensor beaufschlagt (z.B. DE 669 521).

Das Durchführen eines dynamischen Wägevorgangs mit hoher Genauigkeit wird umso schwieriger, je schneller das zu wiegende Gut über den Lastaufnehmer einer oder mehrerer Wägezellen bewegt wird. Die Messwerterfassung muss entsprechend innerhalb einer immer kürzeren Zeitspanne durchgeführt werden. Dabei können Fälle auftreten, in denen eine dynamische Erfassung der Gewichtskraft nicht mehr mit ausreichender Genauigkeit möglich ist, beispielsweise bei Stückgut mit unregelmäßigen geometrischen Dimensionen und unregelmäßiger Gewichtsverteilung. In diesem Zusammenhang ist aus der DE 100 46 205 A1 bekannt, beim dynamischen Wiegen von Stückgut, den Durchsatz bzw. die Anzahl von Wägevorgängen pro Zeiteinheit dadurch zu erhöhen, dass vor einem Wiegevorgang geometrische Daten des zu wiegenden Stückguts erfasst werden und anschließend entschieden wird, ob das Stückgut (noch) dynamisch gewogen werden kann oder ob die Transportmittel der dynamischen Waage zur Erfassung des Gewichts des betreffenden Stückguts stillgesetzt werden und der Wägevorgang statisch durchgeführt wird (halb dynamisches Wiegen von Stückgut). Auf diese Weise wird vermieden, dass zunächst ein dynamischer Wägevorgang durchgeführt und dessen Fehlschlagen detektiert wird und ggf. anschließend das Stückgut zurücktransportiert und nochmals statisch gewogen werden muss.

Anstelle des Übergangs vom dynamischen zum statischen Wiegen ist auch das Anpassen der Geschwindigkeit der Transportmittel einer dynamischen Wägeeinrichtung an bestimmte Parameter des Stückguts oder an das Messergebnis der Gewichtserfassung möglich (z.B. EP 1 116941). Grundsätzlich ist es jedoch gewünscht, möglichst jeglichen statischen Wägevorgang und jede Reduktion der Transportgeschwindigkeit zu vermeiden, da hierdurch der Durchsatz der Wägeeinrichtung drastisch reduziert wird.

Zusätzlich zu den Beeinträchtigungen der Messgenauigkeit, die auf der Seite der analogen Messwerterfassung entstehen, hat sich herausgestellt, dass die Messgenauigkeit beim dynamischen Wiegen von Stückgut mittels Wägeeinrichtungen, die zwei und mehr Wägezellen aufweisen, also insbesondere im Fall von Verbundwaagen und Multi-point-Waagen, durch die Digitalisierung der analogen Messwertsignale und die digitale Verarbeitung der digitalen Messwerte weiter reduziert wird. Dieser Effekt nimmt insbesondere mit steigender Transportgeschwindigkeit für das zu wiegende Stückgut zu.

Generell ist es bei Waagen mit mehreren Wägezellen, insbesondere Kombinationswaagen, bekannt, die analogen. Signale der einzelnen Kraftaufnehmer mittels eines elektronischen Multiplexers oder Analogschalters jeweils nacheinander auf einen einzigen Analog/Digitalwandler durchzuschalten und dann das jeweils durchgeschaltete Signal, welches einer Teilgewichtskraft entspricht, abzutasten und in ein digitales Signal zu wandeln. Derartige Vorrichtungen sind beispielsweise aus der US 4, 539,050, der US 5,002 141 US 5,756,938 bekannt. Hierdurch wird jedoch keine im Wesentlichen gleichzeitige Erfassung der Teilgewichtskräfte ermöglicht.

Aus der WO 02/063254 A1 ist eine Mehrpunktwaage bekannt, bei der mittels einer Mehrzahl von Kraftsensoren, die als Dehnungsmessstreifen ausgebildet sind, die auf jeden einzelnen Kraftsensor wirkende Kraft bzw. deren zeitlicher Verlauf bestimmt wird. Das Analogsignal jedes der Kraftsensoren wird mittels eines zugeordneten Analog/Digitalwandlers und eines Prozessors bestimmt. Dabei kann zur Reduzierung des schaltungstechnischen Aufwands auch mehreren Kraftsensoren jeweils ein Analog/Digitalwandler zugeordnet sein, wobei die digitalen Signale jeweils über eine Bus-Schnittstelle einem Prozessor zur weiteren Verarbeitung zugeführt werden. Der zeitliche Ablauf der Messwerterfassung für die einzelnen Kraftsensoren ist hier nicht näher erläutert.

Weiterhin ist aus der US4 134 464 eine Wägevorrichtung zum Wiegen von bewegten Zugwagons bekannt, bei der mittels eines A/D-Wandlers, dem ein Multiplexer vorgeschaltet ist, jeweils digitale Werte eines Gewichtssignals von zwei, an den Multiplexer angeschlossenen Lastzellen ermittelt werden. Hierzu steuert ein Microprozessor den A/D-Wandler mit einem Triggersignal an, welches einen Wandlungsprozess startet, und erzeugt Ansteuersignale für den Multiplexer zur Auswahl eines der diesem zugeführten analogen Eingangssignale der Lastzellen.

Schließlich beschreibt die US 3 258 764 ein Spannungsmess- und Wandlungssystem, welches eine diesem zugeführte analoge Spannung einer Lastzelle in digitale Werte konvertiert. Die Triggerung der Wandlungsvorgänge kann mittels eines Sampler-Systems erfolgen, welche beispielsweise in vorbestimmten Zeitintervallen Triggerimpulse erzeugen kann. Zudem ist ein Triggereingang für ein externes Triggersignal vorgesehen.

Der Erfindung liegt daher ausgehend von dem eingangs genannten Stand der Technik die Aufgabe zugrunde, eine Wägeeinrichtung, insbesondere eine dynamische Wägeeinrichtung, zu schaffen, bei der mehrere Wägezellen zur Ermittlung der Gewichtskraft eines zu wiegenden Guts verwendet sind und welche eine verbesserte Genauigkeit bei der Erfassung der Gesamtgewichtskraft eines zu wiegenden Guts aufweist. Des Weiteren liegt der Erfindung die Aufgabe zugrunde, eine Wägevorrichtung für eine derartige Wägeeinrichtung zu schaffen.

Die Erfindung löst diese Aufgabe mit den Merkmalen der Patentansprüche 1 und 2 bzw. 20.

Die Erfindung geht von der Erkenntnis aus, dass bei einer Wägeeinrichtung, bei der die Teilgewichtssignale der einzelnen Wägevorrichtungen nicht analog erfasst und mittels eines Analogrechners zu dem gewünschten Differenz- oder Summensignal verrechnet werden, sondern bei der die analogen Teilgewichtssignale zunächst digitalisiert und anschließend die digitalisierten und ggf. gemittelten Teilgewichtssignale addiert bzw. subtrahiert werden, das Problem auftritt, dass jeder zeitliche Versatz bei der Digitalisierung der Teilgewichtssignale und jeder zeitliche Versatz bei der Verrechnung digitalisierter Werte der Teilgewichtssignale zu einem Messfehler bei der Ermittlung der Gesamtgewichtskraft führt. Dieser wirkt sich insbesondere bei Präzisionsmessungen mittels schneller, dynamischer Waagen stark aus, wenn mittlere und große Massen mit hoher Geschwindigkeit während des Wägevorgangs über die mehreren Wägebänder einer Verbundwaage bewegt werden.

Wird beispielsweise ein 1500 g schwerer und 100 mm langer Gegenstand, der eine homogene Gewichtsverteilung aufweist, mit einer Transportgeschwindigkeit von 2 m/s über eine Verbundwaage mit zwei nacheinander angeordneten Wägebändern (bei diesen beaufschlagt jedes Transportband jeweils eine eigene Wägevorrichtung) bewegt, dann ändert sich die auf eine Wägevorrichtung wirkende Teilgewichtskraft an jeder Wägevorrichtung um 30 g je Millisekunde während der Phase, in der die Gewichtskraft des Gegenstands auf beide Wägevorrichtung wirkt. Damit würde bereits bei einem zeitlichen Versatz von 1 ms zwischen den Teilgewichtswerten (beispielsweise weil das Analogsignal der einen Wägevorrichtung um 1 ms später abgetastet und digitalisiert wird als das Analogsignal der anderen Wägevorrichtung) der Teilgewichtswert der einen Wägevorrichtung um 30 g zu hoch oder zu niedrig bestimmt. Dies würde bei einem maximal zulässigen Fehler bei der Bestimmung der Gesamtgewichtskraft von 0,1 g bis 1,0 g, wie dies in der Praxis durchaus realistisch ist, zu unzulässigen Abweichungen führen.

Grundsätzlich tritt diese Problematik auch bei Wägeeinrichtungen mit mehreren Wägevorrichtungen (sog. Multi-point-Wägeeinrichtungen) auf, wenn während der Messwerterfassung der einzelnen Teilgewichte eine Verlagerung des zu wiegenden Guts erfolgt. Dies führt zu einer zeitlichen Änderung der von den Wägevorrichtungen erfassten Teilgewichtskräfte, auch wenn in diesem Fall, unabhängig von einer nicht-homogenen Gewichtsverteilung eines zu wiegenden Guts, immer ein linearer und normalerweise flach verlaufender Übergang zwischen den von den einzelnen Wägevorrichtungen erfassten Teilgewichtskräften vorliegt. Eine derartige Wägeeinrichtung ist beispielsweise in der EP 0 656 530 A1 oder der DE 102 21 628 A1 beschrieben.

Ein zeitlicher Versatz der von den einzelnen Wägevorrichtungen erfassten Teilgewichtswerte kann entstehen als konstante Verzögerung, beispielsweise durch FilterLaufzeiten oder Einschwingcharakteristiken der mechanischen und elektrischen Komponenten der Wägevorrichtungen einschließlich deren Regelverhalten sowie durch bestimmte konstante Laufzeiten von Software-Prozessen, und als zufällige Verzögerung oder Jitter, beispielsweise durch die Abarbeitung von Software-Prozessen als Reaktion auf zufällig auftretende externe Ereignisse. Ein derartiges externes Ereignis kann beispielsweise eine Kommunikationsanforderung auf einem Kommunikationsbus sein, mit dem die betreffende Wägevorrichtung, auf der die Software abläuft, mit einer anderen Wägevorrichtung oder einer übergeordneten Einheit kommuniziert.

Erfindungsgemäß weist daher eine als Master-Wägevorrichtung fungierenden Wägevorrichtung einer Wägeeinrichtung mit wenigstens zwei Wägevorrichtungen einen mit der Steuereinheit oder der Analog/Digital-Wandlereinheit verbundenen Synchronisationsausgang auf, welchem ein Synchronisationssignal zugeführt wird, welches zumindest die Information der Startzeitpunkte der einzelnen von der Analog/Digital-Wandlereinheit durchgeführten Wandlungsprozesse zur Ermittlung jeweils eines digitalen Wertes des digitalen elektrischen Signals beinhaltet. Dieses Synchronisationssignal der als Master-Wägevorrichtung fungierenden Wägevorrichtung kann dann einer oder mehreren weiteren, als Slave-Wägevorrichtungen fungierenden Wägevorrichtungen zugeführt werden, um die Wandlungsprozesse der Slave-Wägevorrichtungen, die von deren Analog/Digital-Wandlereinheiten durchgeführt werden, auf das Synchronisationssignal und damit auf die Wandlungsprozesse der Analog/Digital-Wandlereinheit der Master-Wägevorrichtung zu synchronisieren.

Nach der Erfindung ist der Synchronisationsausgang als separater Ausgang ausgebildet, welchem das Synchronisationssignal in Form eines digitalen Signals zugeführt ist. Mit anderen Worten, der Synchronisationsausgang soll nicht im Rahmen eines Kommunikationsbusses realisiert sein, auf welchem das Synchronisationssignal als zu dekodierender Software-Befehl an die Slave-Wägevorrichtung übermittelt wird. Durch die Verwendung eines separaten Synchronisationsausgangs, dem ausschließlich das Synchronisationssignal zugeführt ist, werden unzulässige zeitliche Abweichungen und Verzögerungen bei der Übertragung der Information betreffend die Startzeitpunkte der in der Master-Wägevorrichtung durchgeführten Analog/Digital-Wandlungsprozesse vermieden.

Eine als Slave-Wägevorrichtung fungierende Wägevorrichtung weist erfindungsgemäß einen mit der Steuereinheit oder der Analog/Digital-Wandlereinheit verbundenen Synchronisationseingang auf, welchem ein externes Synchronisationssignal zuführbar ist, welches zumindest die Information eines oder mehrerer erwünschter Startzeitpunkte für jeweils einen von der Analog/Digital-Wandlereinheit durchzuführenden Wandlungsprozesses zur Ermittlung jeweils eines digitalen Wertes des digitalen elektrischen Signals beinhaltet. Die Analog/Digital-Wandlereinheit der Slave-Wägevorrichtung führt die Wandlungsprozesse entsprechend dem ihr unmittelbar zugeführten externen Synchronisationssignal oder entsprechend dem einen ihr von der Steuereinheit zugeführten internen Synchronisationssignal durch, welches die Steuereinheit aus dem ihr zugeführten externen Synchronisationssignal ableitet und der Analog/Digital-Wandlereinheit zugeführt ist.

Die Analog/Digital-Wandlereinheit der Wägevorrichtungen einer Wägeeinrichtung nach der Erfindung weist einen Reset-Eingang auf, welchem das externe Synchronisationssignal oder das interne Synchronisationssignal zugeführt ist, wobei die Analog/Digital-Wandlereinheit nach jedem, einen Reset-Vorgang auslösenden Ereignis des Reset-Signals mit einem Wandlungsprozess beginnt und hierzu erforderlichenfalls einen gerade laufenden Wandlungsprozess stoppt.

In der bevorzugten Ausführungsform ist die erfindungsgemäße Wägevorrichtung so ausgebildet, dass sie sowohl als Master-Wägevorrichtung als auch als Slave-Wägevorrichtung fungieren kann. Hierzu kann eine entsprechende Konfiguration über entsprechende Konfigurationsmittel vorgesehen sein, beispielsweise durch eine Software-Konfiguration, die auch über eine Schnittstelle von extern ermöglicht sein kann, oder durch eine Hardware-Konfiguration, beispielsweise durch Jumper.

Die Steuereinheit der Wägevorrichtung kann ein im Wesentlichen periodisches internes Synchronisationssignal erzeugen und dieses der eigenen Analog/Digitalwandlereinheit und/oder dem Synchronisationsausgang zuführen. Selbstverständlich kann das Synchronisationssignal jedoch auch von der Analog/Digital-Wandlereinheit erzeugt werden, die über einen internen Schwingkreis verfügen kann, von dem das Synchronisationssignal abgeleitet wird, wobei auch die von der betreffenden Analog/Digitalwandlereinheit durchgeführten Wandlungsprozesse entsprechend diesem Synchronisationssignal durchgeführt werden.

Wird das externe Synchronisationssignal nicht unmittelbar der Analog/Digital-Wandlereinheit zugeführt, sondern der Steuereinheit, so kann die Steuereinheit das von ihr erzeugte interne Synchronisationssignal mit dem ihr zugeführten externen Synchronisationssignal synchronisieren.

Das externe Synchronisationssignal kann für jeden durchzuführenden Wandlungsprozess ein auslösendes Ereignis aufweisen. Dabei kann es sich beispielsweise um eine fallende oder steigende Flanke eines digitalen Synchronisationssignals handeln.

Nach einer bevorzugten Ausführungsform der Erfindung kann jede Wägevorrichtung einer Wägeeinrichtung einen mit der Steuereinheit verbundenen Eingang für das Zuführen eines externen Messvorgang-Signals aufweisen, wobei die Steuereinheit nach dem Detektieren eines Startereignisses im Messvorgang-Startsignal einen oder mehrere digitale Werte des digitalen elektrischen Signals als relevante Messwerte erfasst. Die digitalen Werte können in einem hierfür bestimmten Speicher abgelegt oder sofort weiterverarbeitet, beispielsweise zur Bildung eines Mittelwerts aufsummiert werden.

Nach einer Ausführungsform kann die Steuereinheit einer Wägevorrichtung nach dem Detektieren eines Startereignisses im Messvorgang-Startsignal eine vorbestimmte Anzahl von digitalisierten Werten, welche mittels einer entsprechenden Anzahl von Wandlungsprozessen erzeugt werden, als relevante Messwerte erfassen, wobei die Wandlungsprozesse entsprechend dem internen oder externen Synchronisationssignal durchgeführt werden.

Statt dessen kann die Steuereinheit jedoch auch so ausgebildet sein, dass sie nach dem Detektieren eines Startereignisses im externen Messvorgang-Signal solange eine Anzahl von digitalisierten Werten, welche mittels einer entsprechenden Anzahl von Wandlungsprozessen erzeugt werden, als relevante Messwerte erfasst, bis sie ein Stopp-Ereignis im Messvorgang-Signal detektiert, wobei die Wandlungsprozesse entsprechend dem internen oder externen Synchronisationssignal durchführt werden.

In beiden Fällen wird mittels des externen Messvorgang-Signals ein Master-Messfenster erzeugt, wobei von der Wägevorrichtung innerhalb des Master-Messfensters ermittelte digitale Messwerte als relevante Messwerte herangezogen werden.

In einer weiteren Ausführungsform kann die Steuereinheit einer Master-Wägevorrichtung in *einem Master-Modus als ersten digitalen Wert denjenigen analog/digital gewandelten Wert verwenden, dessen zugehöriger Wandlungsprozess als erster nach dem Detektieren des Startereignisses im externen Messvorgang-Startsignal gestartet wurde oder denjenigen analog/digital gewandelten Wert, dessen zugehöriger Wandlungsprozess als erster nach dem Detektieren des Startereignisses im externen Messvorgang-Startsignal beendet wurde.

Arbeitet die Steuereinheit einer Slave-Wägevorrichtung in einem Slave-Modus, so kann sie diejenigen digitalen Werte als relevante Messwerte verwenden, die gegenüber den Messwerten, die bei dieser Wägevorrichtung im Master-Modus als relevante Messwerte verwendet würden, um eine Anzahl von m Abtastzeitpunkten in Richtung auf frühere Abtastzeitpunkte versetzt sind, wobei die Anzahl m ganzzahlig und größer oder gleich eins, vorzugsweise gleich eins ist. Hierdurch kann der Tatsache Rechnung getragen werden, dass es kaum möglich ist, in mehreren Wägevorrichtungen absolut gleichzeitig das Vorliegen eines Startereignisses im externen Messvorgang-Signal zu detektieren, selbst wenn das externe Messvorgang-Signal jeder Wägevorrichtung absolut gleichzeitig, d.h. verzögerungsfrei zugeführt werden könnte. In der Praxis würden jedoch auch zusätzlich durch Signallaufzeiten, Filterlaufzeiten und dergleichen derartige Verzögerungen zwischen den jeweils einer Wägevorrichtung zugeführten externen Messvorgang-Signalen auftreten. Hierdurch käme es zu einem zeitlichen Versatz von Abtastwerten, die als relevante Messwerte berücksichtig würden und damit ggf. zu einer unzureichenden Genauigkeit bei der Bestimmung der Gesamtgewichtskraft des zu wiegenden Stückguts durch die Addition und/oder Subtraktion der Teilgewichtskräfte.

Erfindungsgemäß kann daher die Master-Wägevorrichtung einer Wägeeinrichtung einen mit der Steuereinheit verbundenen Ausgang zur Abgabe eines abhängigen Messvorgang-Signals an wenigstens eine weitere Wägevorrichtung aufweisen, wobei die Steuereinheit im Master-Modus nach der Erfassung eines Startereignisses im externen Messvorgang-Signal auch ein Startereignis im abhängigen Messvorgang-Signal erzeugt. Auf diese Weise wird im abhängigen Messvorgang-Signal, welches einer im Slave-Modus arbeitenden Wägevorrichtung zugeführt werden kann, ein Slave-Messfenster definiert, welches gegenüber dem Master-Messfenster zeitlich verzögert ist.

Dabei kann die Verzögerung zwischen dem Detektieren des Startereignisses im externen Messvorgang-Signal und dem Erzeugen des Startereignisses im abhängigen Messvorgang-Signal definiert so gewählt werden, dass die Slave-Messzelle unter allen Umständen während des Slave-Messfensters eine Reihe aufeinanderfolgender Abtastwerte erfassen würde, die gegenüber den mittels des Master-Messfensters von der Master-Wägevorrichtung erfassten Abtastwerte um eine Anzahl von m Abtastzeitpunkte verzögert sind.

Da die Slave-Messzelle jedoch im Vergleich mit der Master-Wägevorrichtung zeitgleich erfasste Messwerte erfassen soll, verwendet die Steuereinheit in einem Slave-Modus diejenigen digitalen Werte als relevante Messwerte, die gegenüber den Messwerten, die die Slave-Messzelle im Master-Modus (als Reaktion auf das ihr zugeführte abhängige Messvorgang-Signal) als relevante Messwerte verwenden würde, um eine Anzahl von m Abtastzeitpunkten in Richtung auf frühere Abtastzeitpunkte versetzt sind, wobei die Anzahl m ganzzahlig und größer oder gleich eins, vorzugsweise gleich eins ist.

Das abhängige Messvorgang-Signal wird dabei von der Master-Wägevorrichtung so erzeugt, dass das Startereignis im abhängigen Messvorgang-Signal erst nach dem auf das detektierte Startereignis im externen Messvorgang-Startsignal folgenden Startzeitpunkt des externen oder internen Synchronisationssignals für den folgenden Wandlungsprozess liegt, jedoch vor dem nächsten Startzeitpunkt des externen oder internen Synchronisationssignals. In diesem Fall ergibt sich eine Verzögerung des Slave-Messfensters der Slave-Wägevorrichtung gegenüber dem Master-Messfenster der Master-Wägevorrichtung um m=1.

Selbstverständlich kann das Startereignis im abhängigen Messvorgang-Signal auch nach dem auf das detektierte Startereignis im externen Messvorgang-Startsignal folgenden Startzeitpunkt des externen oder internen Synchronisationssignals für den folgenden Wandlungsprozess liegen, jedoch vor dem n-ten nächsten Startzeitpunkt des externen oder internen Synchronisationssignals, wobei n größer als 2 ist. In diesem Fall ergibt sich eine Verzögerung des Slave-Messfensters der Slave-Wägevorrichtung gegenüber dem Master-Messfenster der Master-Wägevorrichtung um m=n-1.

Nach einer Ausführungsform der Erfindung weisen die Wägevorrichtungen einer Wägeeinrichtung jeweils einen mit der Steuereinheit verbundenen Messwertausgang auf, mit welchem die Steuereinheit jeden digitalen relevanten Messwert oder einen aus mehreren digitalen relevanten Messwerten ermittelten digitalen Wert an eine weitere Einheit übertragen kann. Hierzu kann die Steuereinheit die mehreren digitalen relevanten Messwerte aufsummieren oder mitteln und den Summationswert oder Mittelwert an die weitere Einheit übermitteln.

Nach der Erfindung können die Synchronisationssignale entweder von einer im Master-Modus arbeitenden Slave-Wägevorrichtung mittelbar oder unmittelbar an die anderen im Slave-Modus arbeitenden Wägevorrichtungen übertragen werden oder es kann eine separate Einheit zur Erzeugung der Synchronisationssignale vorgesehen sein.

Bei einer erfindungsgemäßen, mehrere Wägevorrichtungen aufweisenden Wägeeinrichtung können die von jeder Wägevorrichtung ermittelten relevanten digitalen Messwerte oder der Endwert oder ein hieraus ermittelter Gewichts- oder Mittelwert an eine oder mehrere bestimmte Wägevorrichtungen übermittelt werden. Die eine oder die mehreren Wägevorrichtungen ermitteln dann, beispielsweise durch Addition und/oder Subtraktion der von den Wägevorrichtungen ermittelten Teilgewichtswerte, einen Summen- oder Gesamtgewichtswert.

Weitere Ausführungsformen ergeben sich aus den Unteransprüchen.

Die Erfindung wird nachstehend anhand eines in der Zeichnung dargestellten Ausführungsbeispiels näher erläutert. In der Zeichnung zeigen:
- Fig. 1: Ein schematisches Blockdiagramm einer Wägeeinrichtung nach der Erfindung mit zwei erfindungsgemäßen Wägevorrichtungen;
- Fig. 2: Ein Diagramm mit für die erfindungsgemäße Funktion relevanten Signalen der Wägeeinrichtung in Fig. 1, insbesondere dem Synchronisationssignal und dem externen Messvorgang-Signal und dem abhängigen Messvorgang-Signal.

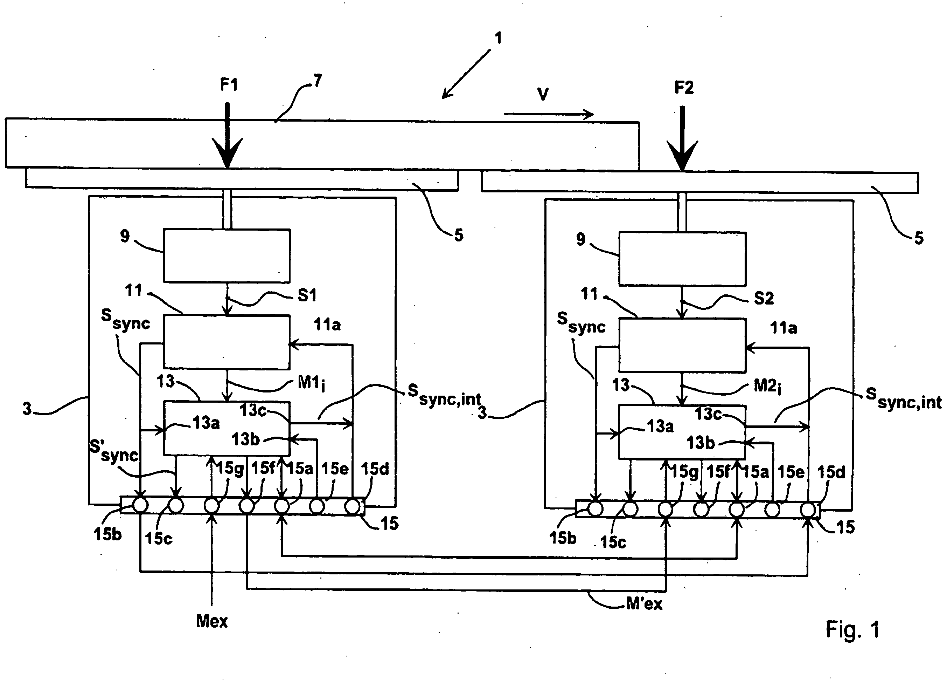

Die in Fig. 1 schematisch dargestellte Wägeeinrichtung 1 ist als Verbundwaage ausgebildet und umfasst zwei als Wägezellen 3 ausgebildete Wägevorrichtungen, die jeweils über einen als Förderband ausgebildeten Lastaufnehmer 5 verfügen. Grundsätzlich lässt sich das anhand der Figuren beschriebene Prinzip der Erfindung jedoch selbstverständlich auch auf Wägevörrichtungen beliebiger Art übertragen.

Auf den Lastaufnehmern 5 der Verbundwaage 1 kann ein zu wiegendes Stückgut 7 in der angegebenen Pfeilrichtung transportiert werden, wobei die Wägeeinrichtung die Gesamtgewichtskraft des Stückguts 7 ermitteln soll. Hierzu werden mittels der Wägezellen 3 die Teilgewichtskräfte F1 und F2 erfasst und rechnerisch zur Gesamtgewichtskraft FG=F1+F2 kombiniert. Die auf die Lastaufnehmer 5 ausgeübten Teilgewichtskräfte F1 bzw. F2 beaufschlagen jeweils eine Kraftaufnehmereinheit bzw. einen Kraftsensor 9 der betreffenden Wägezelle 3.

Jeder der Kraftsensoren 9 wandelt die auf den betreffenden Lastaufnehmer ausgeübte Gewichtskraft Fl, F2 in ein analoges Messsignal S1 bzw. S2 um, welches jeweils einer Analog/Digital-Wandlereinheit 11 zugeführt ist. Die Analog/Digital-Wandlereinheiten 11 können sämtliche Komponenten umfassen, die für die Analog/Digital-Wandlung der analogen Messsignale erforderlich sind und können in an sich bekannter Art und Weise ausgebildet sein.

Die Analog/Digital-Wandlereinheiten 11 tasten das jeweilige Messsignal S1, S2 in üblicherweise im Wesentlichen äquidistanten zeitlichen Abständen ab und wandeln den jeweiligen Abtastwert in einen digitalen Messwert M1ᵢ bzw. M2ᵢ eines entsprechenden digitalen Signals M1 bzw. M2 um. Im Folgenden wird auch der einem (analogen) Abtastwert entsprechende, analog/digital gewandelte Messwert M1ᵢ bzw. M2ᵢ als Abtastwert bezeichnet. Die digitalen Messwerte M1ᵢ bzw. M2ᵢ werden dann jeweils an eine Steuereinheit 13 übertragen und von dieser gespeichert und/oder weiter verarbeitet und/oder an eine weitere Einheit übertragen, beispielsweise an eine übergeordnete Verarbeitungseinheit oder an eine weitere Wägezelle.

Sämtliche Ein- und/oder Ausgänge der Messzellen 3 können, wie in Fig. 1 dargestellt, an einer Schnittstelle 15 zusammengefasst sein. Selbstverständlich können für die betreffenden Ein- und/oder Ausgänge jedoch auch jeweils separate Ausgangsports oder Schnittstellen vorgesehen sein. Die Kommunikation zwischen den Messzellen 3 erfolgt bei der in Fig. 1 dargestellten Ausführungsform über die vorzugsweise bidirektionalen Kommunikationsports 15a. Diese können zur Verbindung der Messzellen 3 untereinander oder aber auch mit einer oder mehreren weiteren Einheiten mittels eines Bussystems ausgebildet sein.

Um Messfehler bzw. unzulässige große Messungenauigkeiten bei der Erfassung der Teilgewichtskräfte Fl, F2 infolge eines zeitlichen Versatzes zwischen den Abtastzeitpunkten der analogen Messsignale S1, S2 möglichst zu vermeiden, ist es erforderlich, die Abtastzeitpunkte der Analog/Digital-Wandlereinheiten möglichst genau zu synchronisieren. Hierzu kann jede Analog/Digital-Wandlereinheit über eine entsprechende interne Steuerung (nicht dargestellt) verfügen, beispielsweise einem hochfrequenten Schwingkreis, dessen Ausgangssignal mittels eines Frequenzteilers in seiner Frequenz soweit heruntergeteilt wird, bis ein Digitalsignal entsteht, welches in vorbestimmten, zeitlich äquidistanten Abständen eine steigende oder fallende Flanke aufweist, die dann als Startsignal für einen Wandlungsprozess dient. Beispielsweise kann dieses Digitalsignal eine Periodendauer von 1 ms aufweisen, so dass die Analog/Digital-Wandlereinheit im Abstand von 1 ms einen digitalisierten Abtastwert liefert. Dieses Digitalsignal kann, wie in Fig. 1 dargestellt, als Synchronisationssignal S_{sync} dem Ausgangsport 15b der Schnittstelle 15 zugeführt sein. Zusätzlich kann das Synchronisationssignal S_{sync} auch der Steuereinheit 13 an einem Eingangsport 13a zugeführt sein. Die Steuereinheit kann dann das ihr zugeführte Signal S_{sync} weiter verarbeiten, beispielsweise dessen Frequenz noch weiter reduzieren, wenn eine Synchronisation der Startzeitpunkte der Analog/Digital-Wandlungsprozesse einer weiteren Wägezelle nicht bei jedem Wandlungsprozess erforderlich ist, da die betreffende Analog/Digital-Wandlereinheit 11 ebenfalls selbsttätig in annähernd identischen zeitlichen Abständen angestoßen wird.

Das von der Steuereinheit 13 verarbeitete Synchronisationssignal S'_{sync} ist ebenfalls zur bedarfsweisen Verwendung dem Ausgangsport 15c der Schnittstelle 15 zugeführt.

Die in Fig. 1 dargestellte Ausführungsform einer Wägeeinrichtung 1 zeigt Wägezellen 3, die identisch ausgebildet und universell einsetzbar sind. Sie verfügen nicht nur über die für die Realisierung der dargestellten Wägeeinrichtung 1 zwingend erforderlichen Mittel bzw. Signale und Signalein- und/oder Ausgänge, sondern auch über Mittel bzw. Signale und Signalein- und/oder Ausgänge mit denen weitere Ausführungsformen realisierbar sind.

Beispielsweise ist bei der in Fig. 1 dargestellten Ausführungsform der Wägeeinrichtung 1 das Synchronisationssignal S_{sync} über den Ausgangsport 15b der ersten Wägezelle 3 dem Eingangsport 15d und damit dem Reset-Eingang 11a der Analog/Digital-Wandlereinheit 11 der zweiten Wägezelle 3 zugeführt. Auf diese Weise wird jeder Wandlungsprozess der Analog/Digital-Wandlereinheit 11 der zweiten Wägezelle 3 mit dem betreffenden Wandlungsprozess der Analog/Digital-Wandlereinheit 11 der ersten Wägezelle 3 synchronisiert.

In einer anderen Ausführungsform kann anstelle des Synchronisationssignals S_{sync} das Synchronisationssignal S'_{sync} der anderen Wägezelle 3 zugeführt, also der Ausgangsport 15c der ersten Wägezelle 3 mit dem Eingangsport 15d der zweiten Wägezelle 3 verbunden werden. Ist jedoch die Analog/Digital-Wandlereinheit 11 der zweiten Wägezelle 3 nicht in der Lage, das Synchronisationssignal S'_{sync} zu verarbeiten, weil sie ein Synchronisationssignal benötigt, das für jeden durchzuführenden Wandlungsprozess ein Startsignal aufweist, so kann das Synchronisationssignal S'_{sync} auch dem Eingangsport 15e der Schnittstelle 15 und hierüber einem Eingangsport 13b der Steuereinheit 13 zugeführt sein. Die Steuereinheit 13 kann dann ihrerseits, beispielsweise mittels einer PLL-Schaltung ein in seiner Frequenz vervielfältigtes internes Synchronisationssignal S_{sync,int} erzeugen und der Analog/Digital-Wandlereinheit 11 zuführen. Dies ist in Fig. 1 durch den Pfeil zwischen einem Ausgangsport 13c der Steuereinheiten 13 und der Signalleitung zwischen dem Eingangsport 15d der Schnittstelle 15 und dem Eingangsport 11a der Analog/Digital-Wandlereinheit 11 angedeutet. Selbstverständlich können hierfür jedoch auch eine eigene Signalleitung zwischen dem Ausgangsport 13c der Steuereinheiten 13 und einem entsprechenden weiteren Eingangsport der Analog/Digital-Wandlereinheiten 11 vorgesehen sein.

Durch die vorstehend beschriebenen Maßnahmen und Mittel lässt sich somit eine sehr gute Synchronisation der in den Analog/Digital-Wandlereinheiten 11 stattfindenden Wandlungsprozesse erreichen. In der Praxis beträgt der maximale noch auftretende zeitliche Unterschied bei der Abtastung der analogen Messsignale S1, S2 eine Periodendauer des Signals des hochfrequenten Schwingkreises, der in den Analog/Digital-Wandlereinheiten 11 enthalten ist oder dessen Signal den Analog/Digital-Wandlereinheiten 11 zugeführt ist und liegt in der Größenordnung von einigen zehn Nanosekunden.

Zur Realisierung dieser Genauigkeit wird man bestrebt sein, diejenigen Teile der Signalverarbeitung, die die Synchronisation der Analog/Digital-Wandlereinheiten 11 bewirken, durch Hardware zu realisieren oder durch Softwareprozesse mit einer sehr hohen Priorität, die in der Steuereinheit 13 ablaufen.

Die Abtastung und Digitalisierung der analogen Messsignale S1, S2 kann fortwährend, beispielsweise mit einer konstanten Periodendauer von 1 ms erfolgen. Die digitalisierten Messwerte M1ᵢ bzw. M2ᵢ können in der betreffenden Steuereinheit gespeichert werden, beispielsweise in einem Speicher, in welchem jeweils nur die z letzten digitalen Messwerte M1ᵢ bzw. M2ᵢ abgelegt werden. Die Steuereinheit kann auch eine Verarbeitung der Messwerte M1ᵢ bzw. M2ᵢ vornehmen und ein entsprechendes Ergebnis, beispielsweise einen Mittelwert über eine bestimmte Anzahl von Messwerten, an eine weitere Einheit übertragen. Bei dieser weiteren Einheit kann es sich um die zweite Wägezelle oder auch eine übergeordnete Einheit handeln. Selbstverständlich können auch die jeweils aktuell erfassten digitalen Messwerte M1ᵢ bzw. M2ᵢ an eine derartige weitere Einheit übertragen werden, die dann eine entsprechende Weiterverarbeitung durchführt.

Das Übertragen der digitalen Messwerte M1ᵢ bzw. M2ᵢ oder von hieraus verarbeiteten Werten kann über den Kommunikationsport 15a der Schnittstellen 15 der Messzellen 3 erfolgen. Da eine derartige Kommunikation nicht in Echtzeit erfolgen muss, können die diese Kommunikation realisierenden Softwareprozesse bzw. -routinen eine niedrige Priorität aufweisen.

Neben der vorstehend beschriebenen Synchronisation der in den Analog/Digital-Wandlereinheiten 11 ablaufenden Wandlungsprozesse muss auch festgelegt werden, welche der digitalen Messwerte M1ᵢ bzw. M2ᵢ zur Ermittlung der Gesamtgewichtskraft herangezogen werden sollen. Hierzu kann beispielsweise mittels einer nicht dargestellten Lichtschranke die Länge eines gerade der Wägeeinrichtung 1 zugeführten, zu wiegenden Stückguts 7 ermittelt und hieraus ein externes Messvorgang-Signal Mₑₓ für die Wägeeinrichtung 1 erzeugt werden. Das Messvorgang-Signal Mₑₓ ist der ersten Wägezelle 3 am Eingangsport 15g zugeführt und weist ein Startereignis auf, welches den Zeitpunkt festlegt, zu dem die eigentliche Gewichtserfassung beginnen soll.

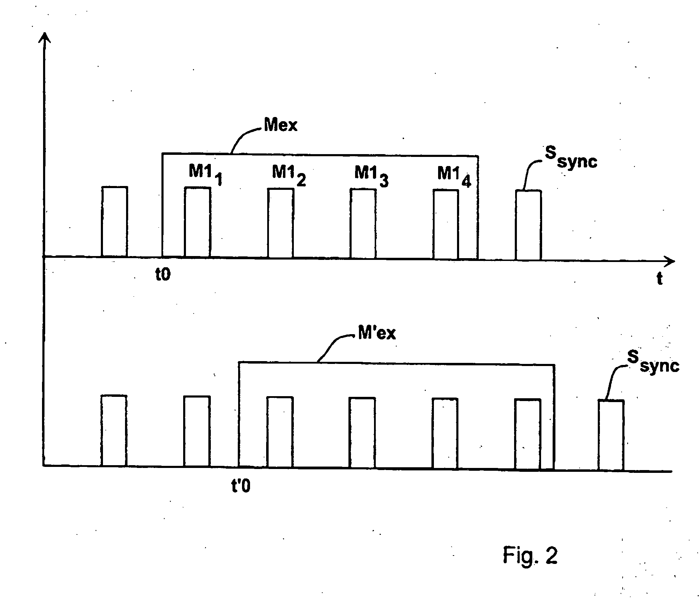

Fig. 2 verdeutlicht die betreffende Funktionsweise der ersten Wägezelle 3, die in einem Master-Modus arbeitet. Zur Aktivierung des Master-Modus können geeignete und an sich bekannte Konfigurationsmittel vorgesehen sein, beispielsweise ein Hardware-Jumper oder das Zuführen eines entsprechenden Software-Befehls über den Kommunikationsport 15a.

Fig. 2 zeigt zum einen das Synchronisationssignal S_{sync,} wobei im dargestellten Ausführungsbeispiel davon ausgegangen wird, dass jede steigende Flanke der Impulse des Synchronisationssignals S_{sync} den Start eines Wandlungsprozesses der Analog/Digital-Wandlereinheit 11 auslöst. Der entsprechende digital gewandelte Abtastwert M1ᵢ liegt dann nach Ablauf einer bestimmten Zeitspanne vor. Zum anderen zeigt Fig. 2 das externe Messvorgang-Signal Mₑₓ, welches zu einem Zeitpunkt t₀ als Startereignis eine steigende Flanke aufweist, die den Startzeitpunkt für den durchzuführenden Wägevorgang darstellt.

Die im Master-Modus arbeitende erste Wägezelle 3 verwendet die ersten vier digitalen Messwerte M1₁, M1₂, M1₃, M1₄, deren Wandlungsprozess nach dem Zeitpunkt t₀ gestartet wurden, als für die durchzüführende Messung relevante Messwerte. Aus Gründen der Einfachheit sind die Bezugszeichen der Messwerte M1₁, M1₂, M1₃, M1₄, in Fig. 2 über den jeweils den betreffenden Wandlungsprozess startenden Impuls des Synchronisationssignals S_{sync} enthalten, wodurch eine entsprechende Zuordnung signalisiert wird.

Die Steuereinheit 3 summiert im Master-Modus die Messwerte M1₁, M1₂, M1₃, M1₄ auf (und dividiert ggf. zur Bildung eines Mittelwerts für die Teilgewichtskraft F1 durch Vier) und ordnet diesem Ergebnis, ggf. unter Berücksichtigung einer Korrekturvorschrift und nach ggf. erfolgter Korrektur von weiteren Einflüssen (z.B. Temperatureinflüsse, Nichtlinearitäten der Wägezellen etc.) einen Wert für die Teilgewichtskraft F1 zu.

Die Verwendung von vier Messwerten kann entweder durch das Zählen einer vorgegebenen Anzahl von Wandlungsprozessen (z.B. der Startereignisse im Synchronisationssignal) erfolgen oder durch das zusätzliche Festlegen eines Stoppereignisses im externen Messvorgang-Signal, beispielsweise als dessen fallende Flanke. Auf beide Art und Weisen kann ein Master-Messfenster des externen Messvorgang-Signals festgelegt werden.

Da eine Synchronisation der Wandlungsprozesse in den beiden Wägezellen 3 nicht ohne jegliche Abweichungen möglich ist - wenn auch in der Praxis nur geringe Abweichungen auftreten - kann doch der Fall auftreten, dass bei einem Zuführen des externen Messvorgang-Signals Mₑₓ an beide Wägezellen, das Startereignis im externen Messvorgang-Siginial zwischen zwei geringfügig versetzten Startereignissen (steigenden Flanken) der beiden Wägezellen im Synchronisationssignal der beiden Wägezellen liegt. In diesem Fall würden zur Ermittlung der Teilgewichtskräfte von den beiden Wägezellen 3 jeweils digitale Messwerte herangezogen, die ungewollt um einen Abtastzeitpunkt versetzt sind. Dies würde, wie eingangs ausgeführt, zu einem unzulässig großen Messfehler führen.

Um diese Fehlermöglichkeit zu beseitigen, erzeugt die Steuereinheit 13 der ersten Wägezelle aus dem externen Messvorgang-Signal ein abhängiges Messvorgang-Signal (M'ₑₓ), wobei das Startereignis im abhängigen Messvorgang-Signal (M'ₑₓ) erst dann erzeugt wird, wenn in der ersten Wägezelle 3 der auf das Startsignal im externen Messvorgang-Signal folgende Wandlungsprozess gestartet wird. Sind bei der ersten Wägezelle 3 die Startzeitpunkte für die Wandlungsprozesse identisch mit den Startereignissen im Synchronisationssignal S_{sync} so kann die Steuereinheit 13 der ersten Wägezelle 3 das auf das Detektieren des Startereignisses im externen Messvorgang-Signal Mₑₓ folgende Startereignis für einen Wandlungsprozess (z.B. die steigende Flanke) als auslösendes Moment zur Erzeugung des Startereignisses im abhängigen Messvorgang-Signal M'ₑₓ verwenden. Darüber hinaus ist es infolge des maximalen Synchronisationsfehlers (maximal zu erwartende zeitliche Abweichung zwischen den Startzeitpunkten für die Wandlungsprozesse in den beiden Wägezellen) nötig, das Startereignis im abhängigen Messvorgang-Signal M'ₑₓ um den maximalen Synchronisationsfehler gegenüber dem Startsignal im Messvorgang-Signal M'ₑₓ zu verzögern.

Das auf diese Weise erzeugte abhängige Messvorgang-Signal M'ₑₓ wird dem Ausgangsport 15f der Schnittstelle 15 der ersten Wägezelle 3 zugeführt, welcher mit dem Eingangsport 15g der Schnittstelle 15 der zweiten Wägezelle 3 verbunden ist.

Die im Slave-Modus arbeitende Wägezelle 3 wertet das ihr zugeführte abhängige Messvorgang-Signal M'ₑₓ aus und bestimmt hieraus die für die Durchführung der Messung zur Bestimmung der Gewichtskraft F2 relevanten digitalen Messwerte M2ᵢ. Die zweite Wägezelle 3 weiß infolge des aktivierten Slave-Modus, dass nicht die im Slave-Messfenster des Messvorgang-Signals enthaltenen digitalen Messwerte M2₂, M2₃, M2₄, M2₅ zur Bestimmung des Messergebnisses herangezogen werden dürfen, sondern dass ein ihr bekannter zeitlicher Versatz von m Abtastperioden zu berücksichtigen ist. Im dargestellten Fall ist der zeitliche Versatz gleich einer Abtastperiode. Demzufolge verwendet die zweite Wägezelle 3 eine entsprechende Anzahl von Messwerten Mᵢ, die gegenüber den Messwerten Mᵢ innerhalb des Salve-Messfensters um einen Versatz von m=1 in Richtung früherer Messwerte verschoben sind, also die korrekten Messwerte M2₁ M2₂, M2₃, M2₄, die bis auf den maximal möglichen Synchronisationsfehler (Abweichung zwischen den Startzeitpunkten in den Synchronisationssignalen) zeitgleich mit den Messwerten M1₁, M1₃, M1₃, M1₄ der ersten Wägezelle 3 erfasst wurden.

Die Anzahl der für die Messung relevanten Messwerte M2ᵢ kann die Steuereinheit der zweiten (Slave-)Wägezelle 3 wiederum durch das Zählen einer vorgegebenen Anzahl von Abtastprozessen bzw. Messwerten bestimmen oder durch das Detektieren eines Stoppereignisses im abhängigen Messvorgang-Signal, welches von der ersten Wägezelle 3 erzeugt wird.

Selbstverständlich lässt sich dieses vorstehend anhand der Wägeeinrichtung 1 mit zwei Wägezellen erläuterte Prinzip auch auf Wägeeinrichtungen mit drei und mehr Wägezellen übertragen. Die Wägezellen sind dabei in analoger Weise zu verschalten, wobei eine Wägezelle im Master-Modus arbeitet und die übrigen Wägezellen im Slave-Modus.

Das Synchronisationssignal S_{sync} bzw. S'_{sync}: kann den Slave-Wägezellen von der Master-Wägezelle unmittelbar zugeführt werden oder von einer Slave-Wägezelle zur nächsten Slave-Wägezelle in Form einer Kette weitergereicht. Hierzu kann der Ausgangsport 15b oder 15c (je nachdem, welche Art Synchronisationssignal weitergereicht werden soll) mit dem Eingangsport 15d oder 15e der darauf folgenden Slave-Wägezelle verbunden werden.

Zur Bestimmung der Gesamtgewichtskraft F_{G} kann die von den einzelnen Wägezellen 3 in der vorstehenden Weise ermittelte Teilgewichtskraft über den Kommunikationsport 15a an eine einzige vorbestimmte oder an mehrere vorbestimmte oder an alle übrigen Wägezellen oder aber an eine übergeordnete Einheit übermittelt werden. Diese eine oder diese mehreren Wägezellen oder an eine übergeordnete Einheit führen dann die erforderlichen Berechungen aus. Wird die Gesamtgewichtskraft durch mehrere Wägezellen ermittelt, so kann eine Kontrolle der Ergebnisse, z.B. eine Plausibilitätsprüfung, durchgeführt werden. Hierzu können die Ergebnisse an eine einzige Wägezelle oder an eine übergeordnete Einheit übertragen werden, wobei das Ergebnis nur dann anerkannt wird, wenn eine bestimmte Anzahl von Ergebnissen übereinstimmt.

## Patentansprüche

1. Wägeeinrichtung, insbesondere dynamische Wägeeinrichtung, mit wenigstens zwei Wägevorrichtungen (3), welche jeweils aufweisen
(a) eine Kraftaufnehmereinheit (9) zur Umwandlung einer auf einen Lastaufnehmer (5) der Kraftaufnehmereinheit (9) wirkenden Gewichtskraft (F1, F2) in ein analoges elektrisches Signal,
(b) eine Analog/Digital-Wandlereinheit (11), welcher das analoge elektrische Signal (S1, S2) zugeführt ist und welche das analoge elektrische Signal (S1, S2) in ein digitales elektrisches Signal (M1, M2) umsetzt, und
(c) eine Steuereinheit (13) zur Ansteuerung der Analog/Digital-Wandlereinheit (11) und zur weiteren digitalen Verarbeitung der ihr zugeführten digitalen Werte (M1ᵢ, M2ᵢ) des digitalen elektrischen Signals (M1, M2),
**dadurch gekennzeichnet,**
(d) dass eine erste der wenigstens zwei Wägevorrichtungen (3) als Master-Wägevorrichtung fungiert und einen mit der Steuereinheit (13) oder der Analog/Digital-Wandlereinheit (11) verbundenen, separaten Synchronisationsausgang (15b, 15c) aufweist, an welchem ein Synchronisationssignal (S_{sync}, S'_{sync}) in Form eines digitalen Signals ausgegeben wird, welches zumindest die Information der Startzeitpunkte der einzelnen von der Analog/Digital-Wandlereinheit (11) durchgeführten Wandlungsprozesse zur Ermittlung jeweils eines digitalen Wertes (M1ᵢ, M2ᵢ) des digitalen elektrischen Signals (M1, M2) beinhaltet,
(e) dass die wenigstens eine weitere Wägevorrichtung (3) als Slave-Wägevorrichtung fungiert und einen mit der Steuereinheit (13) und/oder der Analog/Digital-Wandlereinheit (11) verbundenen Synchronisationseingang (15d, 15e) aufweist, welchem ein externes Synchronisationssigrial (S_{sync}, S'_{sync}) zuführbar ist, welches zumindest die Information eines oder mehrerer erwünschter Startzeitpunkte für jeweils einen von der Analog/Digital-Wandlereinheit (11) durchzuführenden Wandlungsprozesses zur Ermittlung jeweils eines digitalen Wertes (M1ᵢ, M2ᵢ) des digitalen elektrischen Signals (M1, M2) beinhaltet, und dass die Analog/Digital-Wandlereinheit (11) die Wandlungsprozesse entsprechend dem ihr unmittelbar zugeführten externen Synchronisationssignal (S_{sync}, S'_{sync}) oder entsprechend dem ihr von der Steuereinheit zugeführten internen Synchronisationssignal (S_{sync,int}) durchführt, welches die Steuereinheit aus dem ihr zugeführten externen Synchronisationssignal (S'_{sync}) ableitet und der Analog/Digital-Wandlereinheit (11) zuführt,
(f) dass die Analog/Digital-Wandlereinheit (11) der wenigstens einen weiteren Slave-Wägevorrichtung (3) einen Reset-Eingang (11a) aufweist, welchem das externe Synchronisationssignal (S_{sync}) oder das interne Synchronisationssignal (S_{sync,int}) zugeführt ist, wobei die Analog/Digital-Wandlereinheit (11) nach jedem, einen Reset-Vorgang auslösenden Ereignis des Synchronisationssignals (S_{sync}, S_{sync,int}) mit einem Wandlungsprozess beginnt und hierzu erforderlichenfalls einen gerade laufenden Wandlungsprozess stoppt, und
(g) dass der separate Synchronisationsausgang (15b, 15c) der Master-Wägevorrichtung (3) mit dem Synchronisationseingang (15d, 15e) der wenigstens einen weiteren Slave-Wägevorrichtung (3) verbunden ist, wodurch das Synchronisationssignal (S_{sync}, S'_{sync}) der wenigstens einen weiteren Slave-Wägevorrichtung (3) zugeführt wird.

2. Wägeeinrichtung, insbesondere dynamische Wägeeinrichtung, mit wenigstens zwei Wägevorrichtungen (3), welche jeweils aufweisen
(a) eine Kraftaufnehmereinheit (9) zur Umwandlung einer auf einen Lastaufnehmer (5) der Kraftaufnehmereinheit (9) wirkenden Gewichtskraft (F1, F2) in ein analoges elektrisches Signal,
(b) eine Analog/Digital-Wandiereinheit (11), welcher das analoge elektrische Signal (S1, S2) zugeführt ist und welche das analoge elektrische Signal (S1, S2) in ein digitales elektrisches Signal (M1, M2) umsetzt, und
(c) eine Steuereinheit (13) zur Ansteuerung der Analog/Digital-Wandlereinheit (11) und zur weiteren digitalen Verarbeitung der ihr zugeführten digitalen Werte (M1ᵢ, M2ᵢ) des digitalen elektrischen Signals (M1, M2),
**dadurch gekennzeichnet,**
(d) dass die wenigstens zwei Wägevorrichtungen (3) als Slave-Wägevorrichtungen fungieren und jeweils einen mit der Steuereinheit (13) und/oder der Analog/Digital-Wandlereinheit (11) verbundenen Synchronisationseingang (15d, 15e) aufweisen, welchem ein externes Synchronisationssignal (S_{sync}, S'_{sync}) zuführbar ist, welches zumindest die Information eines oder mehrerer erwünschter Startzeitpunkte für jeweils einen von der Analog/Digital-Wandlereinheit (11) durchzuführenden Wandlungsprozesses zur Ermittlung jeweils eines digitalen Wertes (M1ᵢ, M2ᵢ) des digitalen elektrischen Signals (M1, M2) beinhaltet, und dass die Analog/Digital-Wandlereinheit (11) die Wandlungsprozesse entsprechend dem ihr unmittelbar zugeführten externen Synchronisationssignal (S_{sync}, S'_{sync}) oder entsprechend dem ihr von der Steuereinheit zugeführten internen Synchronisationssignal (S_{sync,int}) durchführt, welches die Steuereinheit aus dem ihr zugeführten externen Synchronisationssignal (S'_{sync}) ableitet und der Analog/Digital-Wandlereinheit (11) zuführt,
(e) dass die Analog/Digital-Wandlereinheit (11) der wenigstens zwei Slave-Wägevorrichtungen (3) einen Reset-Eingang (11a) aufweist, welchem das externe Synchronisationssignal (S_{sync}) oder das interne Synchronisationssignal (S_{sync,int}) zugeführt ist, wobei die Analog/Digital-Wandlereinheit (11) nach jedem, einen Reset-Vorgang auslösenden Ereignis des Synchronisationssignals (S_{sync}, S_{sync,int}) mit einem Wandlungsprozess beginnt und hierzu erforderlichenfalls einen gerade laufenden Wandlungsprozess stoppt, und
(f) dass eine Synchronisationseinheit vorgesehen ist, die einen Ausgang aufweist, an welchem ein dem Synchronisationssignal (S_{sync}, S'_{sync}) ausgegeben wird, und dass dieser Ausgang mit dem Synchronisationseingang (15d, 15e) einer ersten der wenigstens zwei Slave-Wägevorrichtungen (3) und mittelbar oder unmittelbar mit dem Synchronisationseingang (15d, 15e) einer zweiten der wenigstens zwei Slave-Wägevorrichtungen (3) verbunden ist.

3. Wägeeinrichtung nach Anspruch 1 oder 2, **dadurch gekennzeichnet, dass** die Wägevorrichtungen als eigenständige Wägezellen ausgebildet ist.

4. Wägeeinrichtung nach einem der vorhergehenden Ansprüche, **dadurch gekennzeichnet, dass** die Steuereinheiten (13) oder die Analog/Digital-Wandlereinheiten (11) jeweils ein im Wesentlichen periodisches internes Synchronisationssignal (S_{sync,int}) erzeugen.

5. Wägeeinrichtung nach Anspruch 4, **dadurch gekennzeichnet, dass** die Steuereinheit der Slave-Wägevorrichtungen das interne Synchronisationssignal (S_{sync,int}) mit dem ihr zugeführten externen Synchronisationssignal (S_{sync}, S'_{sync}) synchronisiert.

6. Wägeeinrichtung einem der vorhergehenden Ansprüche, **dadurch gekennzeichnet, dass** das externe Synchronisationssignal (S_{sync}) für jeden durchzuführenden Wandlungsprozess ein auslösendes Ereignis aufweist, beispielsweise eine fallende oder steigende Flanke eines digitalen Synchronisationssignals.

7. Wägeeinrichtung nach einem der vorhergehenden Ansprüche, **dadurch gekennzeichnet, dass** die Wägevorrichtungen (3) jeweils einen mit der Steuereinheit (13) verbundenen Eingang für das Zuführen eines externen Messvorgang-Signals (Mₑₓ) aufweisen, wobei die Steuereinheit (13) nach dem Detektieren eines Startereignisses im Messvorgang-Startsignal (Mₑₓ) einen oder mehrere digitale Werte (M1ᵢ, M2ᵢ) des digitalen elektrischen Signals (M1, M2) als relevante Messwerte erfasst.

8. Wägeeinrichtung nach Anspruch 7, **dadurch gekennzeichnet, dass** die Steuereinheit (13) nach dem Detektieren eines Startereignisses im Messvorgang-Startsignal (Mₑₓ) eine vorbestimmte Anzahl von digitalisierten Werten (M1ᵢ, M2ᵢ), welche mittels einer entsprechenden Anzahl von Wandlungsprozessen erzeugt werden, als relevante Messwerte erfasst, wobei die Wandlungsprozesse entsprechend dem internen (S_{sync,int}) oder externen (S_{sync}) Synchronisationssignal durchgeführt werden.

9. Wägeeinrichtung nach Anspruch 7, **dadurch gekennzeichnet, dass** die Steuereinheit (13) nach dem Detektieren eines Startereignisses im externen Messvorgang-Signal (Mₑₓ) solange eine Anzahl von digitalisierten Werten (M1ᵢ, M2ᵢ), welche mittels einer entsprechenden Anzahl von Wandlungsprozessen erzeugt werden, als relevante Messwerte erfasst bis sie ein Stopp-Ereignis im Messvorgang-Signal (Mₑₓ) detektiert, wobei die Wandlungsprozesse entsprechend dem internen (S_{sync,int}) oder externen (S_{sync}) Synchronisationssignal durchgeführt werden.

10. Wägeeinrichtung nach Anspruch 8 oder 9 und Anspruch 1, **dadurch gekennzeichnet, dass** die Steuereinheit (13) der Master-Wägevorrichtung in einem Master-Modus als ersten digitalen Wert denjenigen analog/digital gewandelten Wert (M1ᵢ, M2ᵢ) verwendet, dessen zugehöriger Wandlungsprozess als erster nach dem Detektieren des Startereignisses im externen Messvorgang-Startsignal (Mₑₓ) gestartet wurde oder denjenigen analog/digital gewandelten Wert, dessen zugehöriger Wandlungsprozess als erster nach dem Detektieren des Startereignisses im externen Messvorgang-Startsignal (Mₑₓ) beendet wurde.

11. Wägeeinrichtung nach einem der Ansprüche 7 bis 10, **dadurch gekennzeichnet, dass** die Slave-Steuereinheiten (13) in einem Slave-Modus diejenigen digitalen Werte (M1ᵢ, M2ᵢ) als relevante Messwerte verwenden, die gegenüber den im Master-Modus als relevante Messwerte verwendeten Werten um eine Anzahl von m Abtastzeitpunkten in Richtung auf frühere Abtastzeitpunkte versetzt sind, wobei die Anzahl m ganzzahlig und größer oder gleich eins, vorzugsweise gleich eins ist.

12. Wägeeinrichtung nach einem der Ansprüche 7 bis 11 und Anspruch 1, **dadurch gekennzeichnet, dass** die Master-Wägevorrichtung (3) einen mit der Steuereinheit (13) verbundenen Ausgang (15f) zur Abgabe eines abhängigen Messvorgang-Signals (M'ₑₓ) an wenigstens eine weitere Slave-Wägevorrichtung aufweist, wobei die Steuereinheit (13) der Master-Wägevorrichtung (3) im Master-Modus nach der Erfassung eines Startereignisses im externen Messvorgang-Signal (Mₑₓ) ein Startereignis im abhängigen Messvorgang-Signal (M'ₑₓ) erzeugt.

13. Wägeeinrichtung nach Anspruch 12, **dadurch gekennzeichnet, dass** die Steuereinheit (13) der Master-Wägevorrichtung (3) das Startereignis im abhängigen Messvorgang-Signal (M'ₑₓ) erst nach dem auf das detektierte Startereignis im externen Messvorgang-Startsignal (Mₑₓ) folgenden Startzeitpunkt des externen (S_{sync}) oder internen (S_{sync,int}) Synchronisationssignals für den folgenden Wandlungsprozess erzeugt.

14. Wägeeinrichtung nach Anspruch 13, **dadurch gekennzeichnet, dass** die Steuereinheit (13) der Master-Wägevorrichtung (3) das Startereignis im abhängigen Messvorgang-Signal (M'ₑₓ) zusätzlich um feste Verzögerungszeit verzögert, welche größer ist als ein zu erwartender maximaler Synchronisationsfehler.

15. Wägeeinrichtung nach Anspruch 13 oder 14, **dadurch gekennzeichnet, dass** die Steuereinheit (13) der Master-Wägevorrichtung (3) das Startereignis im abhängigen Messvorgang-Startsignal (M'ₑₓ) vor dem n-ten, auf das detektierte Startereignis im externen Messvorgang-Startsignal (Mₑₓ) folgenden Startzeitpunkt des externen (S_{sync}) oder internen (S_{sync,int}) Synchronisationssignals für den folgenden Wandlungsprozess erzeugt, wobei n ganzzahlig und größer oder gleich zwei, vorzugsweise gleich zwei ist.

16. Wägeeinrichtung nach einem der Ansprüche 12 bis 15, **dadurch gekennzeichnet, dass** die Steuereinheit (13) der Master-Wägevorrichtung (3) nach dem Erfassen eines Stoppereignisses im externen Messvorgang-Signal (Mₑₓ) ein Stopp-ereignis im abhängigen Messvorgang-Signal (M'ₑₓ) erzeugt.

17. Wägeeinrichtung nach einem der vorhergehenden Ansprüche, **dadurch gekennzeichnet, dass** die Wägevorrichtungen (3) einen mit der Steuereinheit (13) verbundenen Messwertausgang (15a) aufweisen, mit welchem die Steuereinheit (13) den einen oder die mehreren erfassten digitalen Werte (M1ᵢ, M2ᵢ) oder einen aus mehreren digitalen, relevanten Messwerten (M1ᵢ, M2ᵢ) ermittelten digitalen Endwert für die auf die Wägevorrichtung wirkende Gewichtskraft an eine weitere Einheit (3) übertragen kann.

18. Wägeeinrichtung nach Anspruch 17, **dadurch gekennzeichnet, dass** die Steuereinheit (13) den digitalen Endwert durch das Aufsummieren oder Mitteln der relevanten Messwerte ermittelt.

19. Wägeeinrichtung nach Anspruch 17 oder 18, **dadurch gekennzeichnet, dass** die von jeder Wägevorrichtung (3) ermittelten relevanten digitalen Messwerte oder der Endwert an eine oder mehrere bestimmte Wägevorrichtungen (3) oder an eine externe Steuerung übermittelt werden und dass die eine oder die mehreren Wägevorrichtungen (3) oder die externe Steuerung einen Gesamt-Gewichtswert ermitteln.

20. Wägevorrichtung für eine Wägeeinrichtung nach einem der vorhergehenden Ansprüche,
(a) mit einer Kraftaufnehmereinheit (9) zur Umwandlung einer auf einen Lastaufnehmer (5) der Kraftaufnehmereinheit (9) wirkenden Gewichtskraft (F1, F2) in ein analoges elektrisches Signal,
(b) mit einer Analog/Digital-Wandlereinheit (11), welcher das analoge elektrische Signal (S1, S2) zugeführt ist und welche das analoge elektrische Signal (S1, S2) in ein digitales elektrisches Signal (M1, M2) umsetzt, und
(c) mit einer Steuereinheit (13) zur Ansteuerung der Analog/Digital-Wandlereinheit (11) und zur weiteren digitalen Verarbeitung der ihr zugeführten digitalen Werte (M1ᵢ, M2ᵢ) des digitalen elektrischen Signals (M1, M2),
**dadurch gekennzeichnet,**
(d) dass die Wägevorrichtung (3) einen mit der Steuereinheit (13) oder der Analog/Digital-Wandlereinheit (11) verbundenen, separaten Synchronisationsausgang (15b, 15c) aufweist, an welchem ein Synchronisationssignal (S_{sync}, S'_{sync}) in Form eines digitalen Signals ausgegeben wird, welches zumindest die Information der Startzeitpunkte der einzelnen von der Analog/Digital-Wandlereinheit (11) durchgeführten Wandlungsprozesse zur Ermittlung jeweils eines digitalen Wertes (M1ᵢ, M2ᵢ) des digitalen elektrischen Signals (M1, M2) beinhaltet,
(e) dass die Wägevorrichtung (3) einen mit der Steuereinheit (13) und/oder der Analog/Digital-Wandlereinheit (11) verbundenen Synchronisationseingang (15d, 15e) aufweist, welchem ein externes Synchronisationssignal (S_{sync}, S'_{sync}) zuführbar ist, welches zumindest die Information eines oder mehrerer erwünschter Startzeitpunkte für jeweils einen von der Analog/Digital-Wandlereinheit (11) durchzuführenden Wandlungsprozesses zur Ermittlung jeweils eines digitalen Wertes (M1ᵢ, M2ᵢ) des digitalen elektrischen Signals (M1, M2) beinhaltet, und dass die Analog/Digital-Wandlereinheit (11) die Wandlungsprozesse entsprechend dem ihr unmittelbar zugeführten externen Synchronisationssignal (S_{sync}, S'_{sync}) oder entsprechend dem ihr von der Steuereinheit zugeführten internen Synchronisationssignal (S_{sync,int}) durchführt, welches die Steuereinheit aus dem ihr zugeführten externen Synchronisationssignal (S'_{sync}) ableitet und der Analog/Digital-Wandlereinheit (11) zuführt, und
(f) dass die Analog/Digital-Wandlereinheit (11) einen Reset-Eingang (11a) aufweist, welchem das externe Synchronisationssignal (S_{sync}) oder das interne Synchronisationssignal (S_{sync,int}) zugeführt ist, wobei die Analog/Digital-Wandlereinheit (11) nach jedem, einen Reset-Vorgang auslösenden Ereignis des Synchronisationssignals (S_{sync}, S_{sync,int}) mit einem Wandlungsprozess beginnt und hierzu erforderlichenfalls einen gerade laufenden Wandlungsprozess stoppt.

## Claims

1. Weighing device, in particular dynamic weighing device, having at least two weighing apparatuses (3) each having
(a) a force transducer unit (9) for converting a weight force (F1, F2) acting on a load transducer (5) of the force transducer unit (9) into an analogue electrical signal,
(b) an analogue/digital converter unit (11), to which the analogue electrical signal (S1, S2) is supplied and which converts the analogue electrical signal (S1, S2) into a digital electrical signal (M1, M2), and
(c) a control unit (13) for controlling the analogue/digital converter unit (11) and for digitally processing further the digital values (M1ᵢ, M2ᵢ) of the digital electrical signal (M1, M2) which are supplied to said control unit,
**characterized**
(d) in that a first of the at least two weighing apparatuses (3) acts as master weighing apparatus and has a separate synchronization output (15b, 15c) which is connected to the control unit (13) or to the analogue/digital converter unit (11) and at which a synchronization signal (S_{sync}, S'_{sync}) is output in the form of a digital signal comprising at least the information relating to the starting times of the individual conversion processes which are carried out by the analogue/digital converter unit (11) for the purpose of determining a respective digital value (M1ᵢ, M2ᵢ) of the digital electrical signal (M1, M2),
(e) in that the at least one further weighing apparatus (3) acts as slave weighing apparatus and has a synchronization input (15d, 15e) which is connected to the control unit (13) and/or to the analogue/digital converter unit (11) and to which an external synchronization signal (S_{sync}, S'_{sync}) can be supplied, which external synchronization signal comprises at least the information relating to one or more desired starting times for a respective conversion process to be carried out by the analogue/digital converter unit (11) for the purpose of determining a respective digital value (M1ᵢ, M2ᵢ) of the digital electrical signal (M1, M2), and in that the analogue/digital converter unit (11) carries out the conversion processes according to the external synchronization signal (S_{sync}, S'_{sync}) directly supplied to it or according to the internal synchronization signal (S_{sync,int}) which is supplied to it by the control unit, said internal synchronization signal being derived by the control unit from the external synchronization signal (S'_{sync}) supplied to said control unit and being supplied to the analogue/digital converter unit (11) by the control unit,
(f) in that the analogue/digital converter unit (11) of the at least one further slave weighing apparatus (3) has a reset input (11a), to which the external synchronization signal (S_{sync}) or the internal synchronization signal (S_{sync,int}) is supplied, wherein, after each event in the synchronization signal (S_{sync}, s_{sync,int}) that triggers a reset operation, the analogue/digital converter unit (11) starts a conversion process and stops a currently running conversion process if necessary for this purpose, and
(g) in that the separate synchronization output (15b, 15c) of the master weighing apparatus (3) is connected to the synchronization input (15d, 15e) of the at least one further slave weighing apparatus (3), as a result of which the synchronization signal (S_{sync}, S'_{sync}) is supplied to the at least one further slave weighing apparatus (3).

2. Weighing device, in particular dynamic weighing device, having at least two weighing apparatuses (3) each having
(a) a force transducer unit (9) for converting a weight force (F1, F2) acting on a load transducer (5) of the force transducer unit (9) into an analogue electrical signal,
(b) an analogue/digital converter unit (11), to which the analogue electrical signal (S1, S2) is supplied and which converts the analogue electrical signal (S1, S2) into a digital electrical signal (M1, M2), and
(c) a control unit (13) for controlling the analogue/digital converter unit (11) and for digitally processing further the digital values (M1ᵢ, M2ᵢ) of the digital electrical signal (M1, M2) which are supplied to said control unit,
**characterized**
(d) in that the at least two weighing apparatuses (3) act as slave weighing apparatuses and each have a synchronization input (15d, 15e) which is connected to the control unit (13) and/or to the analogue/digital converter unit (11) and to which an external synchronization signal (S_{sync}, S'_{sync}) can be supplied, which external synchronization signal comprises at least the information relating to one or more desired starting times for a respective conversion process to be carried out by the analogue/digital converter unit (11) for the purpose of determining a respective digital value (M1ᵢ, M2ᵢ) of the digital electrical signal (M1, M2), and in that the analogue/digital converter unit (11) carries out the conversion processes according to the external synchronization signal (S_{sync}, S'_{sync}) directly supplied to it or according to the internal synchronization signal (S_{sync,int}) which is supplied to it by the control unit, said internal synchronization signal being derived by the control unit from the external synchronization signal (S'_{sync}) supplied to said control unit and being supplied to the analogue/digital converter unit (11) by the control unit,
(e) in that the analogue/digital converter unit (11) of the at least two slave weighing apparatuses (3) has a reset input (11a), to which the external synchronization signal (S_{sync}) or the internal synchronization signal (S_{sync,int}) is supplied, wherein, after each event in the synchronization signal (S_{sync}, S_{sync,int}) that triggers a reset operation, the analogue/digital converter unit (11) starts a conversion process and stops a currently running conversion process if necessary for this purpose, and
(f) in that a synchronization unit is provided, said synchronization unit having an output at which a synchronization signal (S_{sync}, S'_{sync}) is output, and in that this output is connected to the synchronization input (15d, 15e) of a first of the at least two slave weighing apparatuses (3) and is indirectly or directly connected to the synchronization input (15d, 15e) of a second of the at least two slave weighing apparatuses (3).

3. Weighing device according to Claim 1 or 2, **characterized in that** the weighing apparatuses are in the form of independent weighing cells.

4. Weighing device according to one of the preceding claims, **characterized in that** the control units (13) or the analogue/digital converter units (11) each generate a substantially periodic internal synchronization signal (S_{sync,int}).

5. Weighing device according to Claim 4, **characterized in that** the control unit of the slave weighing apparatuses synchronizes the internal synchronization signal (S_{sync,int}) with the external synchronization signal (S_{sync}, S'_{sync}) supplied to it.

6. Weighing device according to one of the preceding claims, **characterized in that** the external synchronization signal (S_{sync}) has a triggering event for each conversion process to be carried out, for example a rising or falling edge of a digital synchronization signal.

7. Weighing device according to one of the preceding claims, **characterized in that** the weighing apparatuses (3) each have an input which is connected to the control unit (13) and is intended for the supply of an external measuring operation signal (Mₑₓ), wherein the control unit (13) captures one or more digital values (M1ᵢ, M2ᵢ) of the digital electrical signal (M1, M2) as relevant measured values after detecting a starting event in the measuring operation starting signal (Mₑₓ).

8. Weighing device according to Claim 7, **characterized in that** the control unit (13) captures a predetermined number of digitized values (M1ᵢ, M2ᵢ), which are generated using a corresponding number of conversion processes, as relevant measured values after detecting a starting event in the measuring operation starting signal (Mₑₓ), wherein the conversion processes are carried out according to the internal synchronization signal (S_{sync,int}) or external synchronization signal (S_{sync}).

9. Weighing device according to Claim 7, **characterized in that** the control unit (13) captures a number of digitized values (M1ᵢ, M2ᵢ), which are generated using a corresponding number of conversion processes, as relevant measured values after detecting a starting event in the external measuring operation signal (Mₑₓ) until the control unit detects a stop event in the measuring operation signal (Mₑₓ), wherein the conversion processes are carried out according to the internal synchronization signal (S_{sync,int}) or external synchronization signal (S_{sync}).

10. Weighing device according to Claim 8 or 9 and Claim 1, **characterized in that** the control unit (13) of the master weighing apparatus in a master mode uses, as the first digital value, that value (M1ᵢ, M2ᵢ) which has been subjected to analogue/digital conversion and whose associated conversion process was started first after detecting the starting event in the external measuring operation starting signal (Mₑₓ) or uses that value which has been subjected to analogue/digital conversion and whose associated conversion process was terminated first after detecting the starting event in the external measuring operation starting signal (Mₑₓ).

11. Weighing device according to one of Claims 7 to 10, **characterized in that** the slave control units (13) in a slave mode use, as relevant measured values, those digital values (M1ᵢ, M2ᵢ) which are offset, with respect to the values used as relevant measured values in the master mode, by a number of m sampling times in the direction of earlier sampling times, wherein the number m is an integer and is greater than or equal to one, preferably equal to one.

12. Weighing device according to one of Claims 7 to 11 and Claim 1, **characterized in that** the master weighing apparatus (3) has an output (15f) which is connected to the control unit (13) and is intended to output a dependent measuring operation signal (M'ₑₓ) to at least one further slave weighing apparatus, wherein the control unit (13) of the master weighing apparatus (3) in the master mode generates a starting event in the dependent measuring operation signal (M'ₑₓ) after capturing a starting event in the external measuring operation signal (Mₑₓ) .

13. Weighing device according to Claim 12, **characterized in that** the control unit (13) of the master weighing apparatus (3) generates the starting event in the dependent measuring operation signal (M'ₑₓ) only after the starting time of the external synchronization signal (S_{sync}) or internal synchronization signal (S_{sync,int}) for the following conversion process, which starting time follows the detected starting event in the external measuring operation starting signal (Mₑₓ).

14. Weighing device according to Claim 13, **characterized in that** the control unit (13) of the master weighing apparatus (3) additionally delays the starting event in the dependent measuring operation signal (M'ₑₓ) by a fixed delay time which is greater than an expected maximum synchronization error.

15. Weighing device according to Claim 13 or 14, **characterized in that** the control unit (13) of the master weighing apparatus (3) generates the starting event in the dependent measuring operation starting signal (M'ₑₓ) before the nth starting time of the external synchronization signal (S_{sync}) or internal synchronization signal (S_{sync,int}) for the following conversion process, which starting time follows the detected starting event in the external measuring operation starting signal (Mₑₓ), where n is an integer and is greater than or equal to two, preferably equal to two.

16. Weighing device according to one of Claims 12 to 15, **characterized in that** the control unit (13) of the master weighing apparatus (3) generates a stop event in the dependent measuring operation signal (M'ₑₓ) after capturing a stop event in the external measuring operation signal (Mₑₓ) .

17. Weighing device according to one of the preceding claims, **characterized in that** the weighing apparatuses (3) have a measured value output (15a) which is connected to the control unit (13) and can be used by the control unit (13) to transmit the one or more captured digital values (M1ᵢ, M2ᵢ), or a digital end value determined from a plurality of digital relevant measured values (M1ᵢ, M2ᵢ), for the weight force acting on the weighing apparatus to a further unit (3).

18. Weighing device according to Claim 17, **characterized in that** the control unit (13) determines the digital end value by adding or averaging the relevant measured values.

19. Weighing device according to Claim 17 or 18, **characterized in that** the relevant digital measured values determined by each weighing apparatus (3) or the end value is/are transmitted to one or more particular weighing apparatuses (3) or to an external controller, and **in that** the one or more weighing apparatuses (3) or the external controller determine(s) an overall weight value.

20. Weighing apparatus for a weighing device according to one of the preceding claims,
(a) having a force transducer unit (9) for converting a weight force (F1, F2) acting on a load transducer (5) of the force transducer unit (9) into an analogue electrical signal,
(b) having an analogue/digital converter unit (11), to which the analogue electrical signal (S1, S2) is supplied and which converts the analogue electrical signal (S1, S2) into a digital electrical signal (M1, M2), and
(c) having a control unit (13) for controlling the analogue/digital converter unit (11) and for digitally processing further the digital values (M1ᵢ, M2ᵢ) of the digital electrical signal (M1, M2) which are supplied to said control unit,
**characterized**
(d) in that the weighing apparatus (3) has a separate synchronization output (15b, 15c) which is connected to the control unit (13) or to the analogue/digital converter unit (11) and at which a synchronization signal (S_{sync}, S'_{sync}) is output in the form of a digital signal comprising at least the information relating to the starting times of the individual conversion processes which are carried out by the analogue/digital converter unit (11) for the purpose of determining a respective digital value (M1ᵢ, M2ᵢ) of the digital electrical signal (M1, M2),
(e) in that the weighing apparatus (3) has a synchronization input (15d, 15e) which is connected to the control unit (13) and/or to the analogue/digital converter unit (11) and to which an external synchronization signal (S_{sync}, S'_{sync}) can be supplied, which external synchronization signal comprises at least the information relating to one or more desired starting times for a respective conversion process to be carried out by the analogue/digital converter unit (11) for the purpose of determining a respective digital value (M1ᵢ, M2ᵢ) of the digital electrical signal (M1, M2), and in that the analogue/digital converter unit (11) carries out the conversion processes according to the external synchronization signal (S_{sync}, S'_{sync}) directly supplied to it or according to the internal synchronization signal (S_{sync,int}) which is supplied to it by the control unit, said internal synchronization signal being derived by the control unit from the external synchronization signal (S'_{sync}) supplied to said control unit and being supplied to the analogue/digital converter unit (11) by the control unit, and
(f) in that the analogue/digital converter unit (11) has a reset input (11a), to which the external synchronization signal (S_{sync}) or the internal synchronization signal (S_{sync,int}) is supplied, wherein, after each event in the synchronization signal (S_{sync}, S_{sync,int}) that triggers a reset operation, the analogue/digital converter unit (11) starts a conversion process and stops a currently running conversion process if necessary for this purpose.

## Revendications

1. Système de pesée, en particulier système de pesée dynamique, avec au moins deux dispositifs de pesée (3), qui présentent respectivement
(a) une unité formant capteur de force (9) servant à convertir une force liée au poids (F1, F2) agissant sur un capteur de charge (5) de l'unité formant capteur de force (9) en un signal électrique analogique,
(b) une unité formant convertisseur analogique-numérique (11), à laquelle est amené le signal électrique analogique (S1, S2) et laquelle convertit le signal électrique analogique (S1, S2) en un signal électrique numérique (M1, M2), et
(c) une unité de commande (13) servant à piloter l'unité formant convertisseur analogique-numérique (11) et servant à traiter ultérieurement de manière numérique les valeurs numériques (M1ᵢ, M2ᵢ) lui étant amenées du signal électrique numérique (M1, M2),
caractérisé en ce
(d) qu'un premier des au moins deux dispositifs de pesée (3) fait office de dispositif de pesée maître et présente une sortie de synchronisation (15b, 15c) séparée, reliée à l'unité de commande (13) ou à l'unité formant convertisseur analogique-numérique (11), au niveau de laquelle un signal de synchronisation (S_{sync}, S'_{sync}) est envoyé sous la forme d'un signal numérique, qui renferme au moins l'information des moments de démarrage des divers processus de conversion effectués par l'unité formant convertisseur analogique-numérique (11) pour déterminer respectivement une valeur numérique (M1ᵢ, M2ᵢ) du signal électrique numérique (M1, M2),
(e) que l'au moins un dispositif de pesée (3) supplémentaire fait office de dispositif de pesée esclave et présente une entrée de synchronisation (15d, 15e) reliée à l'unité de commande (13) et/ou à l'unité formant convertisseur analogique-numérique (11), à laquelle un signal de synchronisation externe (S_{sync}, S'_{sync}) peut être amené, lequel renferme au moins l'information d'un ou de plusieurs moments de démarrage souhaités pour respectivement un processus de conversion à faire effectuer par l'unité formant convertisseur analogique-numérique (11) pour déterminer respectivement une valeur numérique (M1ᵢ, M2ᵢ) du signal électrique numérique (M1, M2), et que l'unité formant convertisseur analogique-numérique (11) effectue les processus de conversion conformément au signal de synchronisation externe (S_{sync}, S'_{sync}) qui lui est directement amené ou conformément au signal de synchronisation interne (S_{sync,int}) qui est amené à l'unité formant convertisseur analogique-numérique par l'unité de commande, que l'unité de commande déduit du signal de synchronisation externe (S'_{sync}) qui lui est amené et amène à l'unité formant convertisseur analogique-numérique (11),
(f) que l'unité formant convertisseur analogique-numérique (11) de l'au moins un dispositif de pesée esclave (3) supplémentaire présente une entrée de réinitialisation (11a), à laquelle le signal de synchronisation externe (S_{sync}) ou le signal de synchronisation interne (S_{sync,int}) est amené, dans lequel l'unité formant convertisseur analogique-numérique (11) commence après chaque événement déclenchant une opération de réinitialisation du signal de synchronisation (S_{sync}, S_{sync,int}) par un processus de conversion et arête à cet effet si nécessaire un processus de conversion précisément en cours, et
(g) que la sortie de synchronisation (15b, 15c) séparée du dispositif de pesée maître (3) est reliée à l'entrée de synchronisation (15d, 15e) de l'au moins un dispositif de pesée esclave (3) supplémentaire, ce qui permet d'amener le signal de synchronisation (S_{sync}, S'_{sync}) à l'au moins un dispositif de pesée esclave (3) supplémentaire.

2. Système de pesée, en particulier système de pesée dynamique, avec au moins deux dispositifs de pesée (3), qui présentent respectivement
(a) une unité formant capteur de force (9) servant à convertir une force liée au poids (F1, F2) agissant sur un capteur de charge (5) de l'unité formant capteur de force (9) en un signal électrique analogique,
(b) une unité formant convertisseur analogique-numérique (11), à laquelle est amené le signal électrique analogique (S1, S2) et laquelle convertit le signal électrique analogique (S1, S2) en un signal électrique numérique (M1, M2), et
(c) une unité de commande (13) servant à piloter l'unité formant convertisseur analogique-numérique (11) et servant à traiter ultérieurement de manière numérique les valeurs numériques (M1ᵢ, M2ᵢ) lui étant amenées du signal électrique numérique (M1, M2),
caractérisé en ce
(d) que les au moins deux dispositifs de pesée (3) font office de dispositifs de pesée esclaves et présentent respectivement une entrée de synchronisation (15d, 15e) reliée à l'unité de commande (13) et/ou à l'unité formant convertisseur analogique-numérique (11), à laquelle un signal de synchronisation externe (S_{sync}, S'_{sync}) peut être amené, lequel renferme au moins l'information d'un ou de plusieurs moments de démarrage souhaités pour respectivement un processus de conversion à faire effectuer par l'unité formant convertisseur analogique-numérique (11) pour déterminer respectivement une valeur numérique (M1ᵢ, M2ᵢ) du signal électrique numérique (M1, M2), et que l'unité formant convertisseur analogique-numérique (11) effectue les processus de conversion conformément au signal de synchronisation externe (S_{sync}, S'_{sync}) qui lui est directement amené ou conformément au signal de synchronisation interne (S_{sync,int}) qui est amené à l'unité formant convertisseur par l'unité de commande, que l'unité de commande déduit du signal de synchronisation externe (S'_{sync}) qui lui est amené et amène à l'unité formant convertisseur analogique-numérique (11),
(e) que l'unité formant convertisseur analogique-numérique (11) des au moins deux dispositifs de pesée esclaves (3) présente une entrée de réinitialisation (11a), à laquelle le signal de synchronisation externe (S_{sync}) ou le signal de synchronisation interne (S_{sync,int}) est amené, dans lequel l'unité formant convertisseur analogique-numérique (11) commence après chaque événement déclenchant une opération de réinitialisation du signal de synchronisation (S_{sync}, S_{sync,int}) par un processus de conversion et arrête à cet effet si nécessaire un processus de conversion précisément en cours, et
(f) qu'une unité de synchronisation est prévue, qui présente une sortie, au niveau de laquelle un signal de synchronisation (S_{sync}, S'_{sync}) est envoyé, et que ladite sortie est reliée à l'entrée de synchronisation (15d, 15e) d'un premier des au moins deux dispositifs de pesée esclaves (3) et indirectement ou directement à l'entrée de synchronisation (15d, 15e) d'un deuxième des au moins deux dispositifs de pesée esclaves (3).

3. Système de pesée selon la revendication 1 ou 2, **caractérisé en ce que** les dispositifs de pesée sont réalisés sous la forme de cellules de pesée autonomes.

4. Système de pesée selon l'une quelconque des revendications précédentes, **caractérisé en ce que** les unités de commande (13) ou les unités formant convertisseurs analogiques-numériques (11) génèrent respectivement un signal de synchronisation interne (S_{sync,int}) sensiblement périodique.

5. Système de pesée selon la revendication 4, **caractérisé en ce que** l'unité de commande des dispositifs de pesée esclaves synchronise le signal de synchronisation interne (S_{sync,int}) avec le signal de synchronisation externe (S_{sync}, S'_{sync}) qui lui est amené.

6. Système de pesée selon l'une quelconque des revendications précédentes, **caractérisé en ce que** le signal de synchronisation externe (S_{sync}) présente pour chaque processus de conversion à effectuer un événement déclencheur, par exemple un flanc descendant ou ascendant d'un signal de synchronisation numérique.

7. Système de pesée selon l'une quelconque des revendications précédentes, **caractérisé en ce que** les dispositifs de pesée (3) présentent respectivement une entrée reliée à l'unité de commande (13) pour l'amenée d'un signal d'opération de mesure externe (Mₑₓ), dans lequel l'unité de commande (13) détecte après la détection d'un événement de démarrage dans le signal de démarrage d'opération de mesure (Mₑₓ) une ou plusieurs valeurs numériques (M1ᵢ, M2ᵢ) du signal électrique numérique (M1, M2) en tant que valeurs de mesure pertinentes.

8. Système de pesée selon la revendication 7, **caractérisé en ce que** l'unité de commande (13) détecte après la détection d'un événement de démarrage dans le signal de démarrage d'opération de mesure (Mₑₓ) un nombre prédéfini de valeurs numériques (M1ᵢ, M2ᵢ), qui sont générées au moyen d'un nombre correspondant de processus de conversion, en tant que valeurs de mesure pertinentes, dans lequel les processus de conversion sont effectués conformément au signal de synchronisation interne (S_{sync,int}) ou au signal de synchronisation externe (S_{sync}).

9. Système de pesée selon la revendication 7, **caractérisé en ce que** l'unité de commande (13) détecte après la détection d'un événement de démarrage dans le signal d'opération de mesure externe (Mₑₓ) un nombre de valeurs numériques (M1ᵢ, M2ᵢ), qui sont générées au moyen d'un nombre correspondant de processus de conversion, en tant que valeurs de mesure pertinentes jusqu'à ce qu'elle détecte un événement d'arrêt dans le signal d'opération de mesure (Mₑₓ), dans lequel les processus de conversion sont effectués conformément au signal de synchronisation interne (S_{sync,int}) ou au signal de synchronisation externe (S_{sync}).

10. Système de pesée selon la revendication 8 ou 9 et la revendication 1, **caractérisé en ce que** l'unité de commande (13) du dispositif de pesée maître utilise dans un mode maître en tant que première valeur numérique la valeur convertie de manière analogique-numérique (M1ᵢ, M2ᵢ), dont précisément le processus de conversion associé a été démarré en premier après la détection de l'événement de démarrage dans le signal de démarrage d'opération de mesure externe (Mₑₓ) ou la valeur convertie de manière analogique-numérique, dont précisément le processus de conversion associé a été terminé en premier après la détection de l'événement de démarrage dans le signal de démarrage d'opération de mesure externe (Mₑₓ).

11. Système de pesée selon l'une quelconque des revendications 7 à 10, **caractérisé en ce que** les unités de commande esclaves (13) utilisent dans un mode esclave les valeurs numériques (M1ᵢ, M2ᵢ) en tant que valeurs de mesure pertinentes, qui précisément sont décalées par rapport aux valeurs utilisées dans le mode maître en tant que valeurs de mesure pertinentes d'un nombre de m moments d'échantillonnage en direction de moments d'échantillonnage plus précoces, dans lequel le nombre m est un nombre entier et est supérieur ou égal à un, de préférence est égal à un.

12. Système de pesée selon l'une quelconque des revendications 7 à 11 et la revendication 1, **caractérisé en ce que** le dispositif de pesée maître (3) présente une sortie (15f) reliée à l'unité de commande (13) servant à envoyer un signal d'opération de mesure dépendant (M'ₑₓ) à au moins un dispositif de pesée esclave supplémentaire, dans lequel l'unité de commande (13) du dispositif de pesée maître (3) génère dans le mode maître après la détection d'un événement de démarrage dans le signal d'opération de mesure externe (Mₑₓ) un événement de démarrage dans le signal d'opération de mesure dépendant (M'ₑₓ).

13. Système de pesée selon la revendication 12, **caractérisé en ce que** l'unité de commande (13) du dispositif de pesée maître (3) génère l'événement de démarrage dans le signal d'opération de mesure dépendant (M'ₑₓ) seulement après le moment de démarrage, suivant l'événement de démarrage détecté dans le signal de démarrage d'opération de mesure externe (Mₑₓ), du signal de synchronisation externe (S_{sync}) ou interne (S_{sync,int}) pour le processus de conversion qui suit.

14. Système de pesée selon la revendication 13, **caractérisé en ce que** l'unité de commande (13) du dispositif de pesée maître (3) temporise l'événement de démarrage dans le signal d'opération de mesure dépendant (M'ₑₓ) en supplément d'une durée de temporisation fixe, qui est supérieure à une erreur de synchronisation maximale attendue.

15. Système de pesée selon la revendication 13 ou 14, **caractérisé en ce que** l'unité de commande (13) du dispositif de pesée maître (3) génère l'événement de démarrage dans le signal de démarrage d'opération de mesure dépendant (M'ₑₓ) avant le n^{ième} moment de démarrage suivant l'événement de démarrage détecté dans le signal de démarrage d'opération de mesure externe (Mₑₓ) du signal de synchronisation externe (S_{sync}) ou interne (S_{sync,int}) pour le processus de conversion qui suit, dans lequel n est un nombre entier et est supérieur ou égal à deux, de préférence est égal à deux.

16. Système de pesée selon l'une quelconque des revendications 12 à 15, **caractérisé en ce que** l'unité de commande (13) du dispositif de pesée maître (3) génère après la détection d'un événement d'arrêt dans le signal d'opération de mesure externe (Mₑₓ) un événement d'arrêt dans le signal d'opération de mesure dépendant (M'ₑₓ).

17. Système de pesée selon l'une quelconque des revendications précédentes, **caractérisé en ce que** les dispositifs de pesée (3) présentent une sortie de valeur de mesure (15a) reliée à l'unité de commande (13), avec laquelle l'unité de commande (13) peut transmettre une ou les nombreuses valeurs numériques (M1ᵢ, M2ᵢ) détectées ou une valeur finale numérique déterminée à partir des nombreuses valeurs de mesure numériques (M1ᵢ, M2ᵢ) pertinentes pour la force liée au poids agissant sur le dispositif de pesée à une unité (3) supplémentaire.

18. Système de pesée selon la revendication 17, **caractérisé en ce que** l'unité de commande (13) détermine la valeur finale numérique par l'addition ou la mise en moyenne des valeurs de mesure pertinentes.

19. Système de pesée selon la revendication 17 ou 18, **caractérisé en ce que** les valeurs de mesure numériques pertinentes déterminées par chaque dispositif de pesée (3) ou la valeur finale sont transmises à un ou plusieurs dispositifs de pesée (3) définis ou à une commande externe, et qu'un dispositif de pesée (3) ou les nombreux dispositifs de pesée ou la commande externe déterminent une valeur de poids totale.

20. Dispositif de pesée pour un système de pesée selon l'une quelconque des revendications précédentes,
(a) avec une unité formant capteur de force (9) servant à convertir une force liée au poids (F1, F2) agissant sur un capteur de charge (5) de l'unité formant capteur de force (9) en un signal électrique analogique,
(b) avec une unité formant convertisseur analogique-numérique (11), à laquelle est amené le signal électrique analogique (S1, S2) et laquelle convertit le signal électrique analogique (S1, S2) en un signal électrique numérique (M1, M2), et
(c) avec une unité de commande (13) servant à piloter l'unité formant convertisseur analogique-numérique (11) et servant à traiter ultérieurement de manière numérique les valeurs numériques (M1ᵢ, M2ᵢ) lui étant amenées du signal électrique numérique (M1, M2),
caractérisé en ce
(d) que le dispositif de pesée (3) présente une sortie de synchronisation (15b, 15c) séparée, reliée à l'unité de commande (13) ou à l'unité formant convertisseur analogique-numérique (11), au niveau de laquelle un signal de synchronisation (S_{sync}, S'_{sync}) est envoyé sous la forme d'un signal numérique, qui renferme au moins l'information des moments de démarrage des divers processus de conversion effectués par l'unité formant convertisseur analogique-numérique (11) pour déterminer respectivement une valeur numérique (M1ᵢ, M2ᵢ) du signal électrique numérique (M1, M2),
(e) que le dispositif de pesée (3) présente une entrée de synchronisation (15d, 15e) reliée à l'unité de commande (13) et/ou à l'unité formant convertisseur analogique-numérique (11), à laquelle un signal de synchronisation externe (S_{sync}, S'_{sync}) peut être amené, lequel renferme au moins l'information d'un ou de plusieurs moments de démarrage souhaités pour respectivement un processus de conversion à faire effectuer par l'unité formant convertisseur analogique-numérique (11) pour déterminer respectivement une valeur numérique (M1ᵢ, M2ᵢ) du signal électrique numérique (M1, M2), et que l'unité formant convertisseur analogique-numérique (11) effectue les processus de conversion conformément au signal de synchronisation externe (S_{sync}, S'_{sync}) qui lui est directement amené ou conformément au signal de synchronisation interne (S_{sync,int}) qui est amené à l'unité formant convertisseur analogique-numérique par l'unité de commande, que l'unité de commande déduit du signal de synchronisation externe (S'_{sync}) qui lui est amené et amène à l'unité formant convertisseur analogique-numérique (11),
(f) que l'unité formant convertisseur analogique-numérique (11) présente une entrée de réinitialisation (11a), à laquelle le signal de synchronisation externe (S_{sync}) ou le signal de synchronisation interne (S_{sync,int}) est amené, dans lequel l'unité formant convertisseur analogique-numérique (11) commence après chaque événement déclenchant une opération de réinitialisation du signal de synchronisation (S_{sync}, S_{sync,int}) par un processus de conversion et arrête à cet effet si nécessaire un processus de conversion précisément en cours.
